# EUROPEAN PATENT SPECIFICATION

(11) **EP 0 619 792 B1**
(45) Date of publication and mention of the grant of the patent: **11.12.1996**
(21) Application number: 92907971.3
(22) Date of filing: 10.01.1992
(51) Int. Cl.: B64B 1/00

(54) **HYBRID AIRCRAFT**
HYBRID-FLUGZEUG
AERONEF HYBRIDE

(43) Date of publication of application: 19.10.1994
(73) Proprietor: BUOYANT COPTER, INC., Newport, DE 19804 (US)
(72) Inventor: CAUFMAN, Robert, L. 205 S. Maryland Avenue, Wilmington, DE 19804 (US)
(74) Representative: Palgen, Peter, Dr. Dipl.-Phys.
(86) International application number: US9200061
(87) International publication number: WO9313979

(56) References cited:
- FR-A- 2 228 664
- FR-A- 2 427 248
- US-A- 1 419 962
- US-A- 4 061 293
- US-A- 4 450 364

## Description

### BACKGROUND OF THE INVENTION

### a) Field of the invention

The present invention relates to an aircraft that is capable of ultra-heavy lifting at a slow speed for extended periods of time without refueling.

More particularly, the invention relates to a hybrid aircraft that provides both aerostatic and aerodynamic lift.

The hybrid aircraft according to the invention, which is particularly useful in both the logging and construction industries, can be briefly disclosed as a semibuoyant composite aircraft comprising a non-rotating aerostat.

### b) Brief description of the Prior art

Semi-buoyant composite aircrafts have already been devised, with a balloon rotating about vertical and horizontal axes respectively, see GB-A-1,460,822 and CA-A-1,171,835. These known aircrafts are efficient but the vertical axis vehicles suffer from a substantial increase of drag (3 fold) and side force resulting from the Magnus effect due to the rotation of their balloon. Likewise, the horizontal axis vehicles are more complex and much heavier.

### SUMMARY OF THE INVENTION

The object of the present invention is to provide a semi-buoyant composite aircraft comprising a balloon that is non-rotating, thereby eliminating the Magnus effect for vertical rotation axis vehicles and the difficult problems associated with the existence of a rotating balloon having a horizontal axis.

The invention can be broadly disclosed as a hybrid aircraft with a large non-rotating balloon chamber containing a lighter-than-air gas which provides a large static lifting force having a magnitude greater than the empty weight of the aircraft. A support structure system which is substantially longer in length than in width is encased within the balloon chamber. The support structure system has two ends which protrude from the balloon chamber at opposite sides thereof, along the center line of the balloon chamber. A rotatable rotor frame is suspended from the ends of the support structure system about the nonrotating balloon chamber.

Blade airfoils are connected to the rotor frame and are oriented radially relative to the axis. The angle of attack of these blade airfoils can be varied. A thrust means is mounted at or near the outboard end of the blade airfoils. Wing airfoils are perpendicularly connected to the end of the blade airfoil at the same end as the thrust means. The angle of attack of these wing airfoils can also be varied.

The aircraft further comprises a cab, a load line and two anti-torque devices when the aircraft has a vertical axis, one to keep the balloon chamber from rotating and the other to maintain and/or adjust the heading of the cab.

The aircraft can have either a vertical or horizontal rotation axis.

A non-restrictive description of some preferred embodiments of invention will now be given with reference to the accompanying drawings.

### BRIEF DESCRIPTION OF THE DRAWINGS

Fig. 1 is a pictorial partially broken away view of an aircraft with a vertical axis according to the invention, with the aircraft lifting an entire tree from a forest.

Fig. 2 is a top plan view of the aircraft with a vertical axis.

Fig. 2a is a side view of the aircraft with a vertical axis.

Fig. 3 is a schematic top plan view of the aircraft with a vertical axis, showing the angle of attack of the vertical wings in trail, or neutral pitch, when the aircraft is in hover or vertical flight.

Fig. 3a is a schematic top plan view of the aircraft with a vertical axis showing the angle of attack of the vertical wings in cyclic pitch when the aircraft is in horizontal flight.

Fig. 4 is an enlarged side elevation of the aircraft with a vertical axis, showing a portion of the vertical axis, control cab and tail rotor.

Fig. 5 is a pictorial view of an aircraft with a horizontal axis according to the invention, showing the gas containment chamber in phantom.

Fig. 6 is a side elevation of the aircraft with a horizontal axis.

Figs. 7, 8 and 9 are front elevations of the aircraft with horizontal axis showing the various positions of the blades and wings in flight.

Figs. 7a, 8a, and 9a are side elevations of the aircraft with a horizontal axis showing the various positions of the blades and wings shown in figs. 7, 8, and 9.

Fig. 10 is a fragmented view of the bottom axle with terminals for hull attachment cables and anti-torque device.

### DETAILED DESCRIPTION OF THE INVENTION

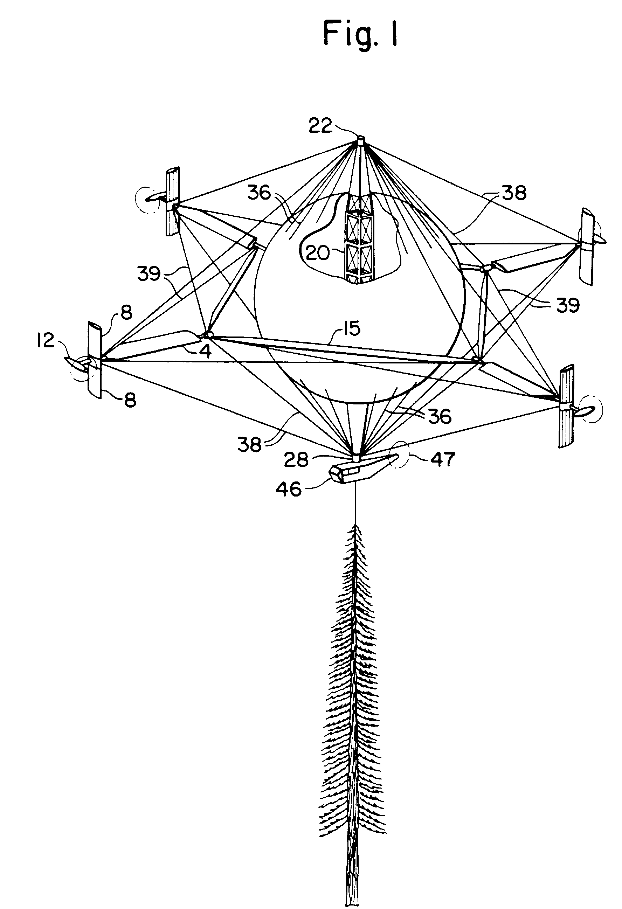

The aircraft with a vertical axis according to the invention as shown in figs. 1 to 4 comprises a support structure 20 oriented vertically and encased within a balloon chamber 1. It also comprises a rotor frame 15 held by means of suspension cables 38 which are connected to the support structure 20 at top terminal 22 and the lower terminal 28. Hull attachment cables 36 position the balloon chamber 1 within the rotor frame 15.

A plurality of blade airfoils 4 are connected to the rotor frame. At the end of each blade airfoil 4 are vertical wing airfoils 8 and a thrust means 12. The thrust means causes the rotor frame 15 to rotate around the stationary balloon chamber 1. The thrust means can be a conventional internal combustion engine with a propeller through it is not limited to this means as other means would work effectively also. Peripheral cables 39 hold the blade airfoils 4 in the proper position.

A control cab 46 is suspended from the lower terminal 28. An anti-torque device 47 is attached to the control cab. In the embodiment shown in fig. 1, the anti-torque device is a propeller but other similar devices are known to one skilled in this art.

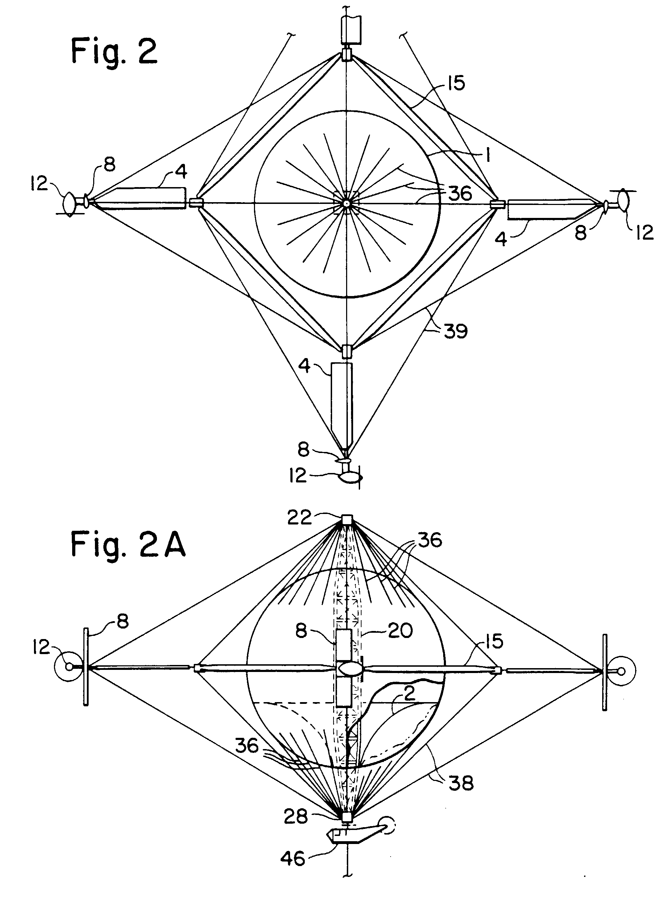

Fig. 2 is a top plan view and shows the balloon chamber 1 enclosed with the rotor frame 15. The balloon chamber 1 is positioned by the hull attachment cables 36. The blade airfoils are connected to the rotor frame. The angle of attack of the blade airfoils can be adjusted collectively and cyclicly to create no lift, positive lift or negative lift.

Fig. 2a is a side view of the aircraft with a vertical axis. The balloon chamber 1 extends above and below the rotor frame 15. The balloon chamber is positioned by the hull attachment cables 36 and the peripheral cables 38 position the airfoils 4 in the proper position.

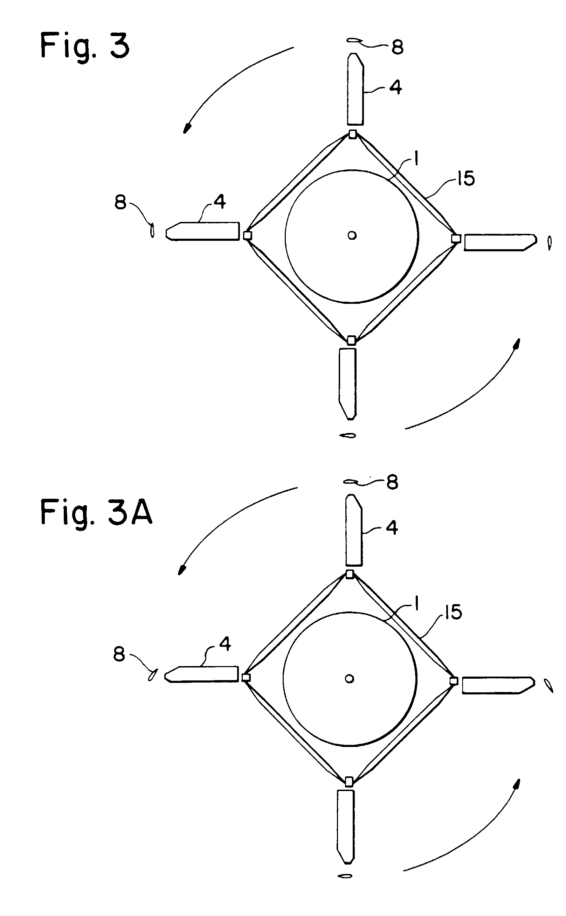

Fig. 3 shows the angle of attack of the vertical wings 8 in trail or neutral pitch, when the aircraft is in hover or vertical flight. Fig. 3a shows the angle of attack at four points of the vertical wings 8 in cyclic pitch when the aircraft is in horizontal flight. In these figures the curved arrows show the direction of the rotation of the rotor frame 15 and the arrow in fig. 3a shows the direction of motion of the aircraft based on the cyclic pitch of the vertical wings 8.

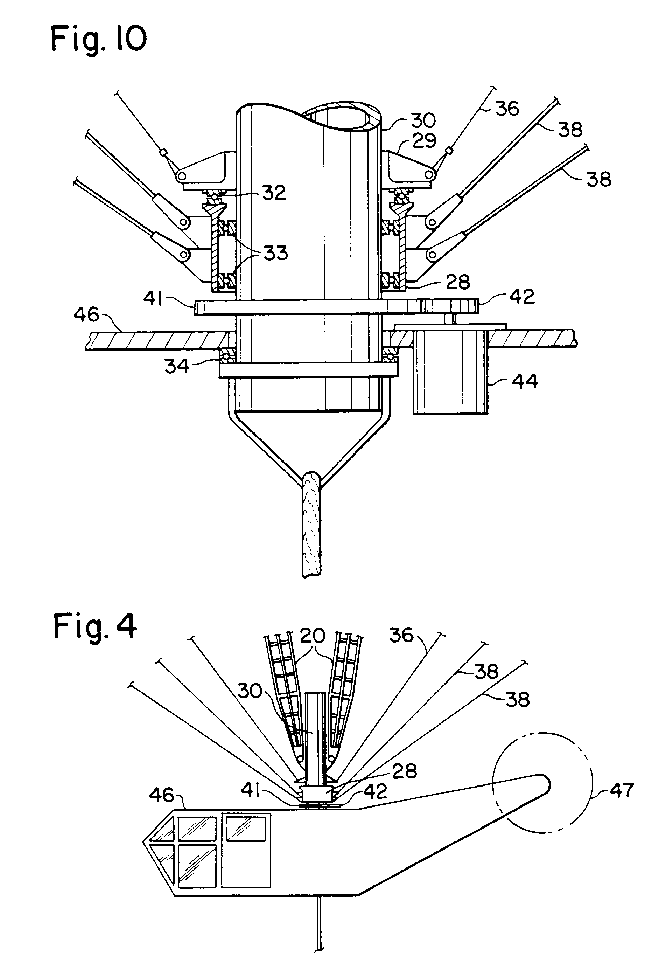

Fig. 4 shows the control cab 46 with the anti-torque propeller 47. The bottom axle 30 with terminals for the hull attachment cables 36 is connected to the support structure 20. The suspension cables 38 are connected to the bottom bearing housing 28. An additional anti-torque device to keep the cab in the desired heading is shown in fig. 10. The motor 44 drives a spur gear 42 which interacts with the ring gear 41.

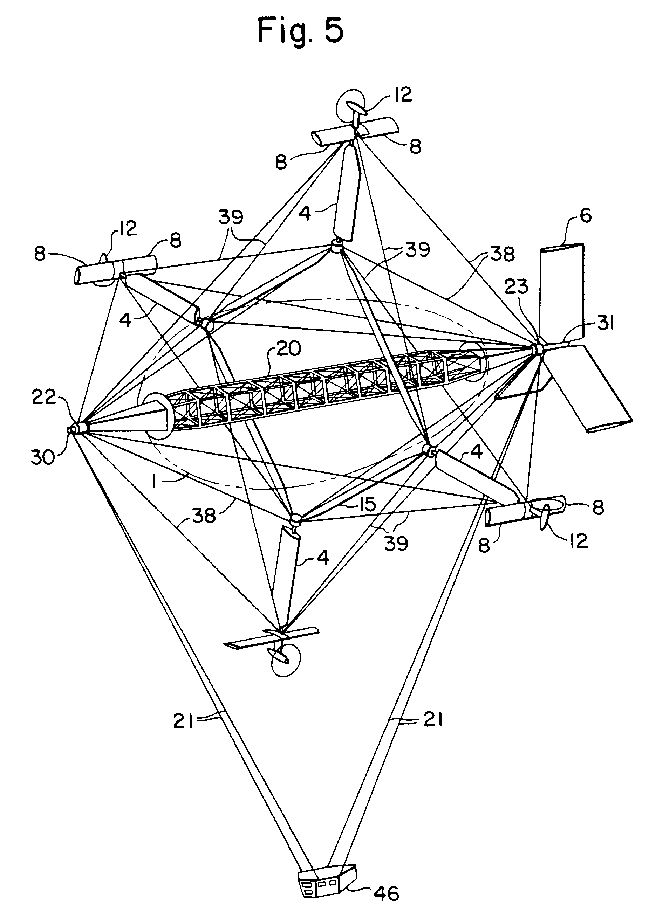

Fig. 5 shows an aircraft having a horizontal rotation axis according to the invention. In this figure, the same reference numerals as above have been used to identify the same structural elements.

The aircraft of fig. 5 has support structure 20 in the horizontal position and a balloon chamber 1 surrounding it. The support structure 20 protrudes out of the balloon chamber 1. A rotor frame 15 encircles the balloon chamber 1. Attached to the rotor frame is a set of blade airfoils 4. The angle of attack of the blade airfoils can be adjusted. At the end of each blade airfoil 4, a wing airfoil 8 is perpendicularly mounted. The angle of attack of the wing airfoil can be adjusted. A thrust means 12 is mounted at or near the blade airfoil 4. The thrust means causes the rotor frame 15 to rotate around the balloon chamber 1. Longitudinal brace cables connect the forward bearinq housing 22 to the aft bearing housing 23 and position the rotor frame 15. Peripheral brace cables 39 position the blade airfoils 4 in a radial direction from the balloon chamber 1. A tail assembly 6 is mounted to the aft axle 31. A control cab 46 is suspended by control cab suspension cables 21 which are attached to the forward axle 30 and the aft axle 31.

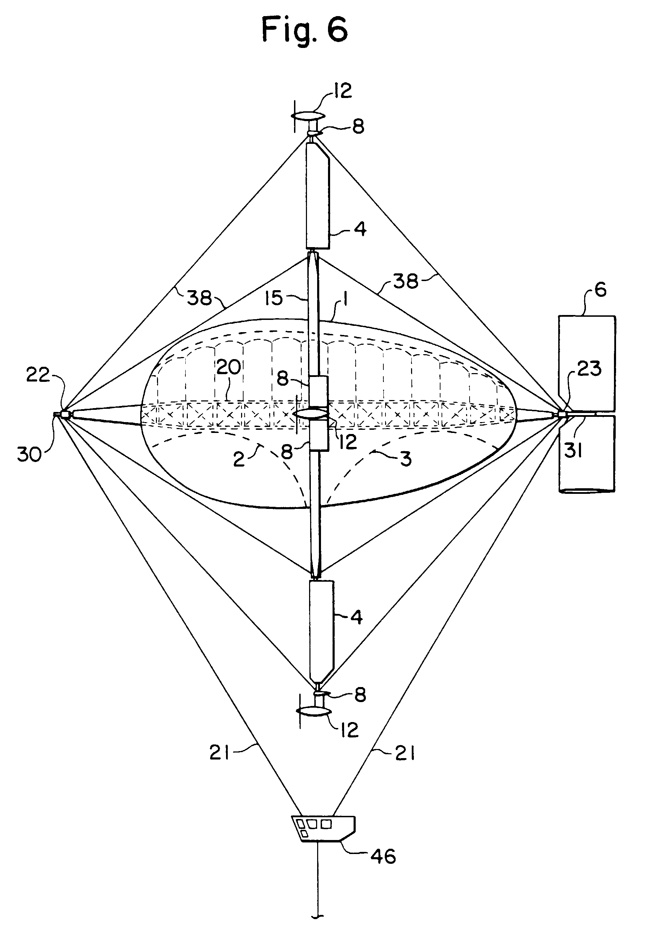

Fig. 6 is a side elevational view of the aircraft with a horizontal axis. A forward ballonet 2 and an aft ballonet 3 are shown within the balloon chamber 1. As is common in the art, the intake fans and exhaust port are located along the bottom center line of the balloon chamber and allow for maintaining a constant pressure or changing pressure of the gas if desired within the balloon chamber. The tail assembly 6 is affixed to the aft axle 31.

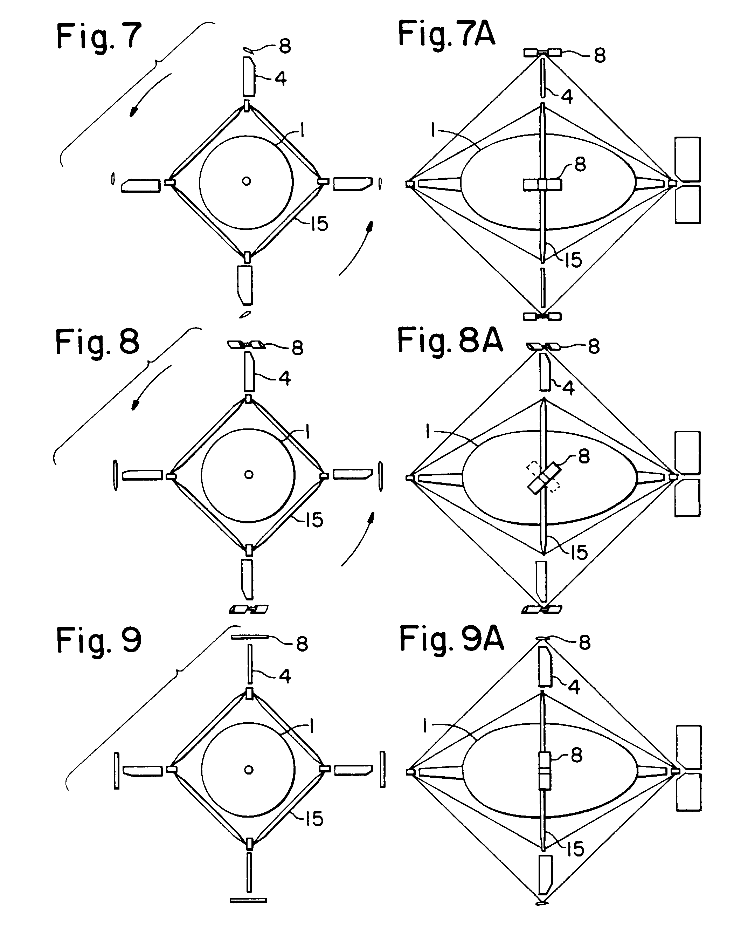

Figs. 7, 7a, 8, 8a, 9, and 9a depict the wing airfoils and the blade airfoils in several different positions during flight. Fig. 7 shows the wing airfoil 8 with cyclic pitch. This is used for producing aerodynamic lift either positive or negative. The blade airfoil 4 is shown in trail or flat pitch. Fig. 7a shows the side view of the aircraft in fig. 7. Fig. 8 shows the blade airfoils 4 collectively pitched to provide forward thrust. They may also be pitched to provide aft thrust. Fig. 8a shows the side view of the aircraft in fig. 8. In fig. 9 the rotor frame is in non-rotational mode. The horizontal blade airfoils 4 develop sufficient lift because of the forward velocity of the aircraft. Fig. 9a shows the side view of the aircraft in fig. 9. Desired directional changes are achieved by a mix of collective and cyclic pitch of the blade airfoils 4.

## Claims

1. A hybrid aircraft comprising:
a large non-rotatable balloon chamber (1) containing a lighter-than-air gas which provides a large static lifting force having a magnitude greater than the empty weight of said aircraft;
a support structure (20) which is substantially longer in length than in width and is encased within the balloon chamber, said support structure having two ends (22,28) which protrude from the balloon chamber at opposite sides along the center line of the balloon chamber;
a rotor frame (15) which is suspended from the ends of the support structure so as to be rotatable about the center line of said balloon chamber, and which extends around the balloon chamber;
a plurality of blade airfoils (4) connected to the rotor frame and oriented radially relative to said balloon chamber, whereby the angle of attack of each blade airfoil can be varied;
a thrust means (12) mounted at or near the outboard end of the blade airfoils;
a wing airfoil (8) perpendicularly connected to the end of each blade airfoil at the same end as the thrust means, whereby the angle of attack of each wing airfoil can be varied;
a control cab (46) attached to said support structure;
a load line (36,38,39), and
anti-torque means (47) for keeping the craft stable when the length of the support structure is vertical.

2. The device as claimed in claim 1 wherein the length of the support structure is substantially horizontal.

3. The device as claimed in claim 1 wherein the length of the support structure is substantially vertical and the anti-torque means includes a tail rotor and a spur and ring gear driven with a motor.

## Patentansprüche

1. Hybrid-Flugzeug, das aufweist:
eine große, nicht drehbare Ballonkammer (1), die ein Gas enthält, das leichter als Luft ist und eine große statische Auftriebskraft schafft, deren Betrag größer als das Leergewicht des Flugzeugs ist;
ein Stützgerüst (20), dessen Erstreckung in Längsrichtung erheblich größer als in Breitenrichtung ist und das innerhalb der Ballonkammer angeordnet ist, wobei das Stützgerüst zwei Enden (22,28) aufweist, welche an entlang der Mittellinie der Ballonkammer entgegengesetzten Seiten aus der Ballonkammer vorstehen;
einen Rotorrahmen (15), welcher an den Enden des Stützgerüstes derart aufgehängt ist, daß er um die Mittellinie der Ballonkammer drehbar ist, und welcher sich um die Ballonkammer herum erstreckt;
mehrere mit dem Rotorrahmen verbundene und, bezogen auf die Ballonkammer, radial ausgerichtete Tragflächenblätter (4), deren Anstellwinkel variiert werden kann;
ein am oder nahe dem Außenbordende der Tragflächenblätter montiertes Schubmittel (12);
eine an den gleichen Enden wie das jeweilige Schubmittel senkrecht zu jedem Tragflächenblatt mit dessen Ende verbundene Flügelfläche (8), deren Anstellwinkel variiert werden kann;
eine an dem Stützgerüst angebrachte Steuerkabine (46);
ein Lastseil; und
Gegendrehmomenterzeuger (47), um das Fahrzeug stabil zu halten, wenn das Stütz gerüst mit seiner Längsrichtung vertikal ausgerichtet ist.

2. Vorrichtung nach Anspruch 1, wobei die Länge des Stützgerüstes (20) im wesentlichen horizontal ausgerichtet ist.

3. Vorrichtung nach Anspruch 1, wobei die Länge des Stützgerüstes (20) im wesentlichen vertikal ausgerichtet ist und der Gegendrehmomenterzeuger einen Heckrotor und ein mit einem Motor angetriebenes Getriebe mit Ritzel und Ringzahnrad aufweist.

## Revendications

1. Aéronef hybride comprenant :
- une large chambre, qui ne tourne pas, en forme de ballon (1), contenant un gaz plus léger que l'air qui fournit une force élévatrice largement statique ayant une amplitude plus grande que le poids à vide dudit aéronef,
- une structure porteuse (20) qui est sensiblement plus longue que large et qui est encastrée dans la chambre en forme de ballon, ladite structure porteuse ayant deux extrémités (22, 28) qui fait saillie à partie de la chambre en forme de ballon sur des côtés opposés le long de la ligne centrale de la chambre en forme de ballon;
- un cadre de rotor (15) qui est suspendu à partir des extrémités de la structure porteuse de façon à pouvoir tourner autour de la ligne centrale de ladite chambre en forme de ballon et qui s'étend autour de la chambre en forme de ballon,
- une multiplicité de plans de sustentation (4) constituée par des pales reliées au cadre du rotor et orientées radialement par rapport à ladite chambre en forme de ballon, l'angle d'attaque de chaque plan de sustentation constitué par une pale pouvant être modifié,
- un moyen de poussée (12) monté à ou près de l'extrémité hors bord des plans de sustentation constitués par des pales,
- un plan de sustentation (8) vertical relié à l'extrémité de chaque plan de sustentation constitué par une pale à la même extrémité comme moyen de poussée, l'angle d'attaque de chaque plan de sustentation constitué par une aile pouvant être modifié,
- une cabine de commande (46) attachée à ladite structure porteuse,
- une ligne de charge (36, 38, 39) et,
- un couple antagoniste (47) pour maintenir stable l'aéronef quand la longueur de la structure porteuse est verticale.

2. Appareil selon la revendication 1,
dans lequel
la longueur de la structure porteuse est sensiblement horizontale.

3. Appareil selon la revendication 1,
dans lequel
la longueur de la structure porteuse est sensiblement verticale et le couple antagoniste comprend un rotor de queue et à engrenage droit et circulaire entraîné par un moteur.
